(19) Europäisches Patentamt

European Patent Office

Office européen des brevets

(11) Publication number: **0 332 228 B1**

## EUROPEAN PATENT SPECIFICATION

(45) Date of publication of patent specification: **23.12.92**   (51) Int. Cl.⁵: **A47J  37/07**, A47J 37/06

(21) Application number: **89107953.5**

(22) Date of filing: **15.01.86**

(60) Publication number of the earlier application in accordance with Art.76 EPC: **0 233 187**

(54) **Portable gas grill.**

(30) Priority: **26.07.85 US 759531**
**08.08.85 US 763858**

(43) Date of publication of application:
**13.09.89 Bulletin  89/37**

(45) Publication of the grant of the patent:
**23.12.92 Bulletin  92/52**

(84) Designated Contracting States:
**AT BE CH DE FR GB IT LI LU NL SE**

(56) References cited:
**FR-E- 12 341**         **US-A- 1 133 850**
**US-A- 1 954 476**    **US-A- 2 233 463**
**US-A- 2 304 140**    **US-A- 2 817 331**
**US-A- 2 905 077**    **US-A- 3 418 921**
**US-A- 3 794 013**

(73) Proprietor: **WEBER-STEPHEN PRODUCTS CO.**
**200 East Daniels Road**
**Palatine, IL 60067(US)**

(72) Inventor: **Lohmeyer, Charles W.**
**274 Hickory Lane**
**Barrington, IL 60010(US)**
Inventor: **Schlosser, Erich J.**
**208 Lakeshore Drive**

**Lindenhurst, IL 60046(US)**
Inventor: **Stephen, James C.**
**15 Regency Drive**
**Arlington Heights, IL 60004(US)**
Inventor: **Leja, Andrzej**
**B Dundee Ouarter**
**Nr. 204 Palatine, IL 60067(US)**
Inventor: **Beecher, John III**
**1154 Chippewa Creek**
**Carpentsville, IL 60110(US)**
Inventor: **Simpkins, Ronald W.**
**511 North Stratford**
**Arlington Heights, IL 60004(US)**
Inventor: **Pestka, Donald E.**
**150 South Walnut**
**Bensenville, IL 60106(US)**

(74) Representative: **Strehl, Schübel-Hopf, Groening**
**Maximilianstrasse 54 Postfach 22 14 55**
**W-8000 München 22(DE)**

## Description

The present invention relates to a portable gas grill comprising a rectangular housing having a gas burner assembly in the bottom and a food support above the gas burner assembly, said housing having upper and lower edges and support members at opposed corners with abutments on upper surfaces between said upper and lower edges and openings in an opposed end wall aligned with said support members, at least two elongated burner units of substantially identical construction, each burner unit consisting of an elongated tube having at least one row of apertures along a peripheral edge and a flattened portion on one end. A gas grill of this type is known from US-A-2 304 140.

According to US-A-1 954 476 it is provided a gridiron frame being slidably mounted for inward and outward movement on lateral trackways at opposite side, so that the grids may be drawn outwardly or inserted. The several burners consist of one piece cast sections of piping having a main semi-cylindrical body portion sloping upwardly and inwardly at each side and terminating in an upper relatively narrow-edge having opposite diverging steeply inclined faces.

It is known from US-A-3 418 921 to provide a plurality of sear bars above burner units. Each sear bar consisting of an elongated inverted V-shaped member to define inclined grease evaporating surfaces extending parallel to said burner units. The rectangular housing has opposed ledges on opposite end walls for supporting said sear bars which define a sear grid above said burner units. It is also provided a second group of sear bars having a different shape in comparison to the first group of sear bars and extending generally perpendicular to said first sear grid.

It is an object of the present invention to improve a gas grill fo this known type in such a manner, that the entire assembly is designed to be easily removable and can be installed without the use of any special tools and in a simplified manner.

The invention achieves this aim by an improvement being characterized by said flattened portion being located in a common plane with said row of apertures, said flattened portion having a slot extending from a free edge with said slot being offset from the center axis of said elongated tube and receiving an abutment so that said tubes can be inserted axially through said openings and be supported on said corner support members and said opposed wall end with said apertures directed towards the center of said housing;

a third burner unit intermediate said two burner units and a pilot tube interconnecting said two burner units adjacent said flattened portions, said third burner unit having a free end supported on said pilot tube and in communication therewith so that one of said burners may be ignited from said pilot tube;

said pilot tube being open at opposite ends and said two burner units having openings receiving said opposite ends, said pilot tube having a projection intermediate opposite ends and said third burner unit having a positioning slot receiving said pilot tube and said projection so that said pilot tube and said burner units can be assembled within said housing by manipulation of said tubes without the use of any fastener means.

The burner assembly is designed to be easily removable and can be installed without the use of any special tools. The burner assembly consists of first and second substantially identical elongated burner tubes having at least one set of spaced apertures and a flat supporting portion on one end. The flat supporting portion has a slot that is offset from the axis of the tube which receives projections extending above support members in an adjacent pair of corners along one end wall. The tubes extend through openings in the opposite end wall so that the burner tube can be moved endwise through the opening in the end wall and have the slot receiving the projection, which preferably is in the form of a threaded screw that can be tightened with a conventional screw driver.

Further improvements of the invention are disclosed in sub-claims 2-11.

Fig. 1 is a perspective view of a gas grill constructed in accordance with the teachings of the present invention;

Fig. 2 is a fragmentary cross-sectional view, as viewed along line 2-2 of Fig. 1, showing the simplified interconnection between tubular members that form the cart;

Fig. 3 is a fragmentary perspective view of the firebox with the cover in a closed position;

Fig. 3A is an enlarged cross section, as viewed along line 3-3 of Fig. 3;

Fig. 4 is a cross-sectional view, as viewed along line 4-4 of Fig. 3;

Fig. 5 is an end view of the sear bar that is used to define a sear grid within the chamber;

Fig. 6 is a cross-sectional view, as viewed along line 6-6 of Fig. 4;

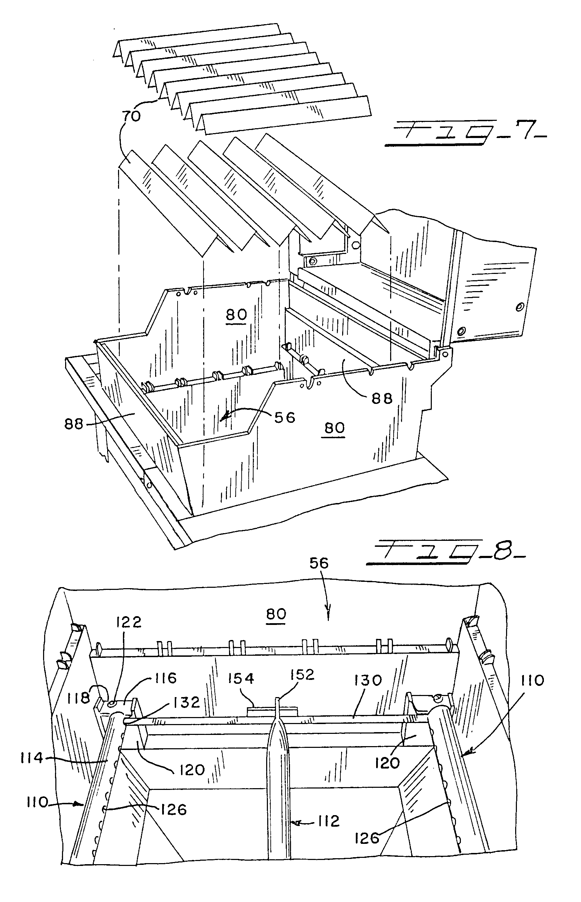

Fig. 7 is an exploded view of the sear grid arrangement within the chamber;

Fig. 8 is a fragmentary top perspective view showing details of the burner assembly;

Fig. 9 is a side view of the pivoted working surface;

Fig. 10 is a bottom view of the view of the working surface, as viewed along line 10-10 of Fig. 9; and

Fig. 11 is a cross-sectional view, as viewed along line 11-11 of Fig. 10.

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

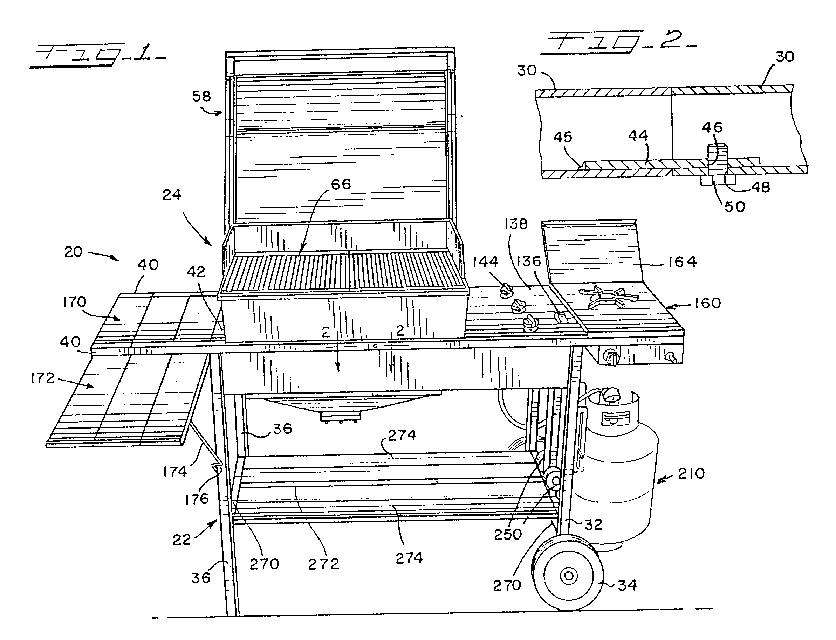

Fig. 1 of the drawings shows a gas grill generally designated by reference numeral 20, constructed in accordance with the teachings of the present invention. The grill 20 consists of a portable cart 22 and a cooking vessel or chamber 24.

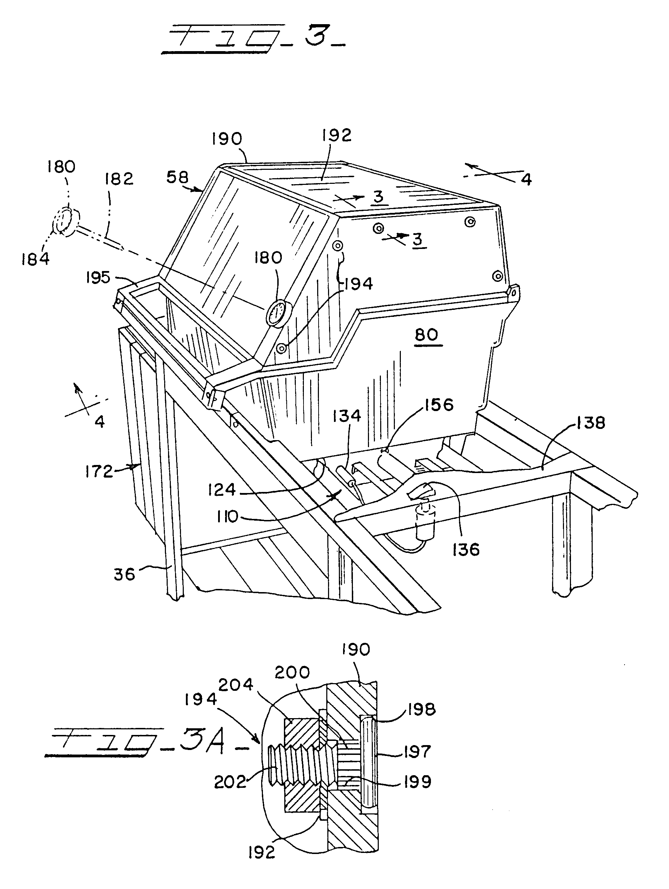

The cart 22 is preferably formed from a plurality of hollow rectangular tubular members 30 (Fig. 2), including a pair of rear vertical posts 32 that define legs supported on wheels 34 at the lower end thereof. The second pair of vertical posts 36 extend upwardly and define the remaining two legs. The upper portion of the cart includes a pair of spaced parallel side members 40 which are interconnected by one or more cross-members 42. According to one aspect of the invention the side members 40 are defined by at least two end-to-end tubular members 30 that are interconnected in a unique fashion, shown in Fig. 2, without the use of any special tools or complicated fasteners.

As illustrated in Fig. 2, one tubular member 30 has a plate-like extension 44 extending from the free end and received into the adjacent open end of an adjacent tubular member 30. The extension has a width approximately equal to the space between the walls of tubular members 30 and is welded at one end 45 to one tubular member to hold the tubular members in end-to-end relation. The plate-like extension 44 has a threaded opening 46, aligned with an opening 48 in the side member, which receives a threaded fastener 50 so that the two tubular members can easily be disconnected and the cart assembly can be broken-down into smaller pieces for shipment and storage. Any number of such pieces of tubing may be utilized in assembling the cart 22 and the upper side members 40 define a generally rectangular opening for receiving the cooking vessel 24.

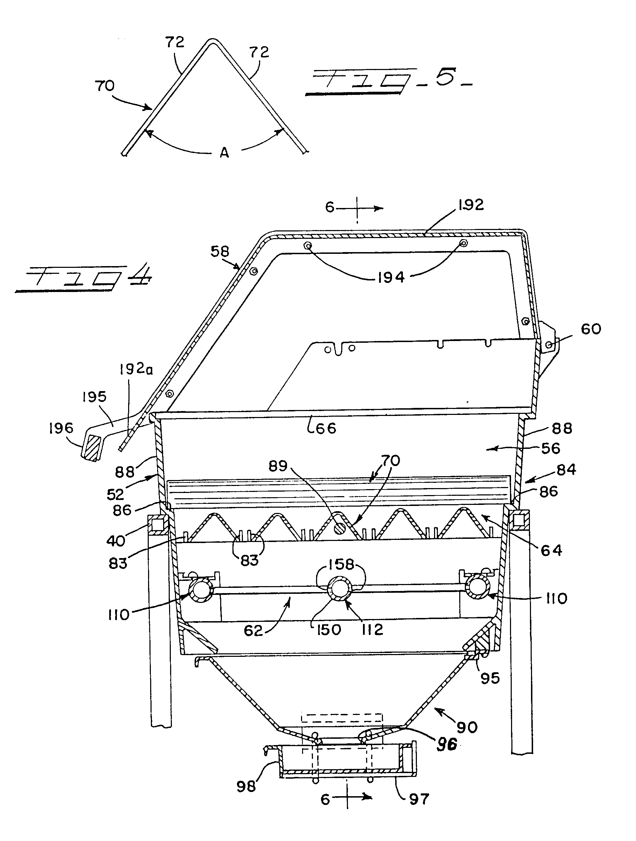

The cooking vessel of housing 24 consists of a lower housing or portion 52 (Fig. 4) defining a chamber 56 and having a cover 58 secured by a hinge 60 to one upper edge of one of the sidewalls that form the chamber 56. The lower chamber has a burner assembly 62 located in a lower portion thereof and a sear grid arrangement 64, located above the burner assembly 62 and a cooking grid 66.

According to the primary aspect of the present invention, the sear grid 64 is designed to replace the conventional heat-absorbing lava rock or equivalent materials and its supporting grid, and functions in a more acceptable manner than any material heretofore utilized. The sear grid 64 includes a plurality of V-shaped sear bars (Fig. 5), generally designated by reference numeral 70, and each sear bar 70 consists of a pair of inclined walls 72 that define an included angle A to produce the desired function of the sear bars. The included angle A is preferably less than 90°, and in the illustrated embodiment the angle is illustrated to be about 75°, but could be about 50° to about 80°.

The inverted V-shaped sear bar 70 is preferably formed from a metal material having good heat conducting characteristics, such as cold-rolled steel, which has a porcelain enamel coating thereon. The two inclined walls 72 define smooth outer inclined flat surfaces that will receive dripping from food, such as meats, being cooked and cause the drippings to flow along the inclined surfaces.

Because of the inverted V-shaped nature of the sear bars, and the fact that they are formed of metal which has good heat conduction, the heat from the burner assembly 62 will be trapped between the sidewalls and will quickly heat the entire sear bar to a temperature sufficient for causing a desired amount of grease received on the outer surfaces of the sidewalls 72 to vaporize and the remaining grease will pass through the sear grid 64 into a lower grease collector unit. In the preferred embodiment, the sear grid 64 is formed by five identically-constructed sear bars 70 that are supported in a predetermined position within the lower chamber 56 with small narrow spaces between adjacent bars that allow the heat to move upwardly into the upper portion of the lower chamber which supports the cooking grill or grid 66.

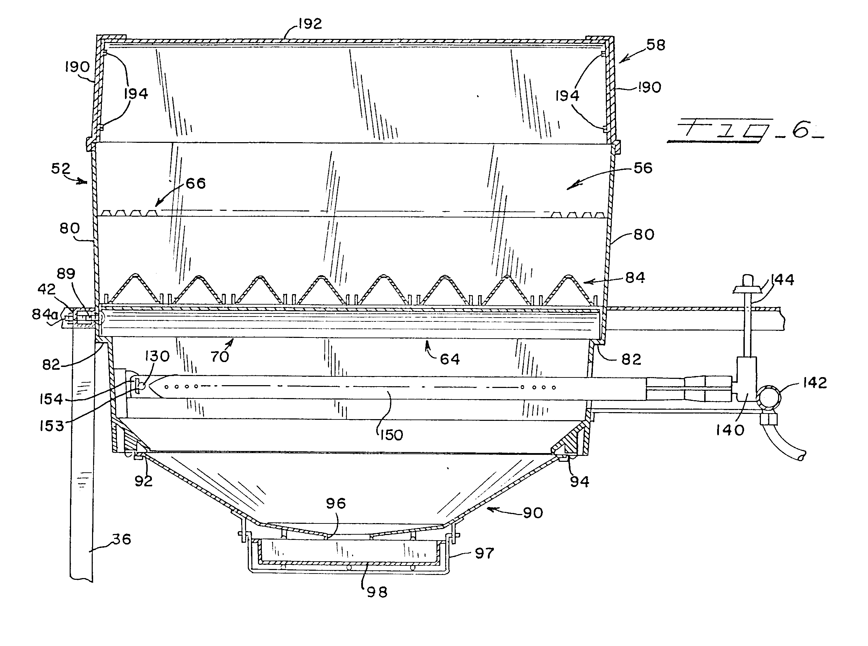

According to one aspect of the present invention, the sear bars are supported within the chamber such that there is no need for any fasteners, and the sear bars may be merely dropped into position. As illustrated in Fig. 6, the front and rear walls 80 of the housing each have an offset portion 82 that define upwardly-facing ledges within the chamber 56. Thus, the sear bars 70 may readily be dropped into position as shown in Figs. 4 and 5 and the opposite ends will rest on the ledges 82. The ledges 82 have positioning elements 83 for defining a predetermined position between respective sear bars, as is shown in Fig. 4.

While not necessary for the practice of this aspect of the invention, the grill includes a second set of sear bars 70 identical to the first set, except for length, that define a second sear grid 84. Again, the sear bars 70 are supported on ledges defined by offsets 86 in the sidewalls 88 of the chamber 56. The ledges 86 again have positioning elements 83 so that the sear bars (Fig. 6) can be dropped into position without the use of any fasteners.

It has been found that the second sear grid 84, in conjunction with the first sear grid 64, will provide more uniform heat for the cooking process than was heretofore possible in utilizing lava rock or other types of heat-absorbing materials.

With the arrangement so far described, any grease or drippings-off of the food being cooked will first hit the outwardly-inclined surfaces of the upper sear grid 84, which are hot and a desired amount of grease and drippings will vaporize while on the sear bars to provide the desired smoke flavoring for the food being cooked. Since each of the burner tubes of the burner assembly 62 (to be described later) is located directly below one inverted V-shaped sear bar, there is no chance of any grease being deposited directly onto the hot burners and any grease passing through the sear grids will be collected in the lower portion of chamber 56.

In this respect, the lower portion of the chamber 56 is defined by a grease collector unit 90. The grease collector unit 90 consists of a tapered tray that has an outwardly-directed lip 92 on the peripheral edge thereof and this outwardly-directed lip is supported on inwardly-directed L-shaped brackets 94 that define slide guides for removal of the tray. It should be noted that the walls of the housing extend below and outside of brackets 94 so that any water will be directed away from the inside of the tray. The collector tray of unit 90 has all of its walls tapering inwardly and downwardly, as shown in Figs. 5 and 6, so that all of the grease drippings will be directed to a central opening 96 in the center of the lowermost portion of the tray 90.

It should be noted that the lower housing 52 defining chamber 56 is formed as a one-piece casting to eliminate any seams on the inner surface. The housing has an inwardly-directed lip 95 that defines a continuous uninterrupted surface which overlaps the peripheral edge of the grease collector unit 90 to insure that no grease escapes from the housing. It should be noted that the bracket 94 is located below the inwardly-directed lip 95, which is an integral part of the cast housing 52.

A further smaller rectangular tray of collector 98 is located below the opening 96 and again is removably supported on a wire assembly 97. Thus, grease collected by the collector unit 90 will flow into the lower centermost opening 96 and into the samll removable tray or cup 98, which can easily be removed and the grease discarded. Alternatively, if a large accumulation of grease should be caught on the tapered walls of the large collector unit 90, the entire unit can be removed and easily be cleaned and reinserted. The samll removable tray collects most of the grease received into the collector and is spaced substantially below the burner units to eliminate any possibility of ignition.

The collector unit 90 may also be used as a broiler by providing a grill, such as a part of the two-piece grill 66.

According to one aspect of the invention, the lower housing 52 is supported on the cart 22 and is suspended on the side members 40. As shown in Fig. 4, the offsets 86 in the sidewalls 88 that form the ledges are positioned such that these ledges will rest on top of the side members 40 to support the entire cooking vessel within the rectangular opening defined by the side members 40. If desired, a single fastener 89 may be utilized for securing the entire cooking vessel to the cart, and this fastener is shown in Fig. 6 extending through the one end wall 80 and the cross member 82 and receives a nut 89a.

According to one further aspect of the invention, the burner assembly 62 is again structurally engineered such that the entire assembly can be assembled by a purchaser without the use of any special tools and in a simplified manner. Thus, as illustrated in Figs. 4 and 8, the burner assembly 62 consists of a pair of outer burner units 110 and an intermediate burner unit 112. The outer burner units 110 are identical in construction and are interchangeable with each other. The outer burner units each consist of an elongated, preferably circular, tube 114 that has a flattened connecting portion 116 at the outer free end thereof. The flat connecting portion 116 has a generally U-shaped slot 118 extending from the free edge thereof and, as shown in Fig. 8, the slot is offset from the axis of the tube 114, for a purpose that will be described later. The lower housing 52 has a pair of corner support members 120 positioned in the corners adjacent the one end wall 80, and these corner support members 120 define an upwardly-directed supporting surface that has an upwardly-extending abutment or projection 122. The abutment or projection is preferably in the form of a threaded fastener or screw that has an enlarged head. The projection could also be formed integrally with the support member 120.

Thus, the burner unit 110 can easily be assembled into the chamber merely by insertion of the end of the tube through an opening 124 in the opposite end wall (see Fig. 3) and the flattened portion 116 can be slid along the upper surface of the corner support member 120, with the treaded fastener 122 received into the slot 118. The burner unit 110 can then be secured by the fastener 122 at one end, while the opposite end rests on the edge of the opening 124 defined in the other end wall 80. Since the projection and slot are offset from the axis of the tube 114, there is no possibility of improper assembly of the two outer burner units 110. These burner units 110 have a row of small apertures 126 that are positioned to be directed inwardly in the assembled condition, as shown in Fig. 8, so that any gas will be directed to the center of the lower chamber.

A third burner unit 112 is preferably located intermediate the first and second burner units and again is easily assembled without the use of any tools. For this purpose, an open-ended connecting tube or pilot tube 130 extends between the two burner units 110 and has opposite ends received into openings 132 located in the tubes 114. The opposite ends of the connecting or pilot tube 130, which is substantially smaller in diameter than the tubes 114, has a plurality of apertures (not shown) so that any gas received into the first burner unit, which is then ignited, will travel through the pilot tube 130 towards the second burner unit 110.

Thus, the first burner unit may be ignited by an electric ignitor 134 (Fig. 3), controlled by a switch 136 that is located on the control panel 138 for all of the burner units. The inner ends of the burner units 110 each having a control valve 140 located between a gas source tube 142 and the end of a burner tube 114. A control knob 144 extends from the control valve and is located above the control panel.

The third burner unit is of slightly different construction and is positioned approximately equidistant between the outer burner units 110. The third burner unit 112 again consists of a generally circular tube 150 that has a flattened portion 152 on the outer free end thereof. The flattened portion 152 has a slot 153 (Fig. 6) for receiving the tube 130 and a small projection or plate 154 welded to the surface of the tube 130 so that the inner burner unit is accurately positioned with respect to the remainder of the burner assembly. The center burner tube 150 extends through an intermediate opening 154 in the other end wall 80 (Fig. 3). The circular tube 150 has two sets of diametrically-opposed apertures 158 (Fig. 4). The intermediate unit 112 again has a valve 140 and control knob 144 as shown in Fig. 6.

With the construction of the burner assembly 62, as described above, all of the burner assembly 62 can be installed without the aid of any tools. In assembling the burner assembly, the center burner unit 112 is inserted through the intermediate opening 156 and tube 130 is moved through the slot 153 in the end of the flattened end portion 152. One end of the tube 130 is then inserted into the opening 132 in one of the burner units 110 after it has been inserted through an opening 124 and the opposite end is then moved into the opening 132 of the second unit 110. Thus, the inner free ends of the burner units are interconnected by the single connecting tube 130 which defines the support for the inner end of the intermediate burner 112. The two outer burner units are then manipulated such that the slots 118 receive the projections 122 and the three burner units are then in the position illustrated in Fig. 8 and can be held in such position by tightening the projections 122. In the assembled condition, the inner end of the burner tubes rest on the lower edges of the respective openings.

The burner assembly 62 can be ignited in sequential order, first by igniting the front burner unit 110 with the ignitor 134 by depressing of the switch 136 on control panel 138. A hole may be provided in the lower chamber for manual ignition, if desired. After the first burner unit is ignited, the second outer burner unit 110 merely needs to have gas supplied thereto and the cross-pilot tube 130 will provide the ignition for the gas in the second burner unit. Likeweise, the supply of gas to the intermediate burner unit will automatically be ignited by the flames from the apertured cross-tube 130.

While the burner units have been shown as linear tubes, other configurations could be used so long as the sear bars have the same configuration as the elongated burner tubes. For example, the burner tubes could be U-shaped in plan view.

According to one further aspect of the invention, the gas grill 20 of the present invention incorporates a separate burner unit 160 which is supported on the side members 40 of the cart 22 adjacent one end thereof. The separate burner unit 160 consists of a gas burner 162 that may normally be closed by a cover 164 hinged along one edge to the burner assembly. The separate burner assembly 160 rests on and is suspended between the side members 40 and can easily be moved to a different location if desired. Alternatively, the second burner unit 160 may be eliminated and a work surface may be provided.

The working surface could be of the type shown in Fig. 1 as being a working board 170 that is supported on the side members 40 by brackets 171 (Fig. 11) adjacent the cooking vessel 24. A further working board 172 may also be provided which is movable between stored and usable positions respectively shown in Figs. 3 and 1.

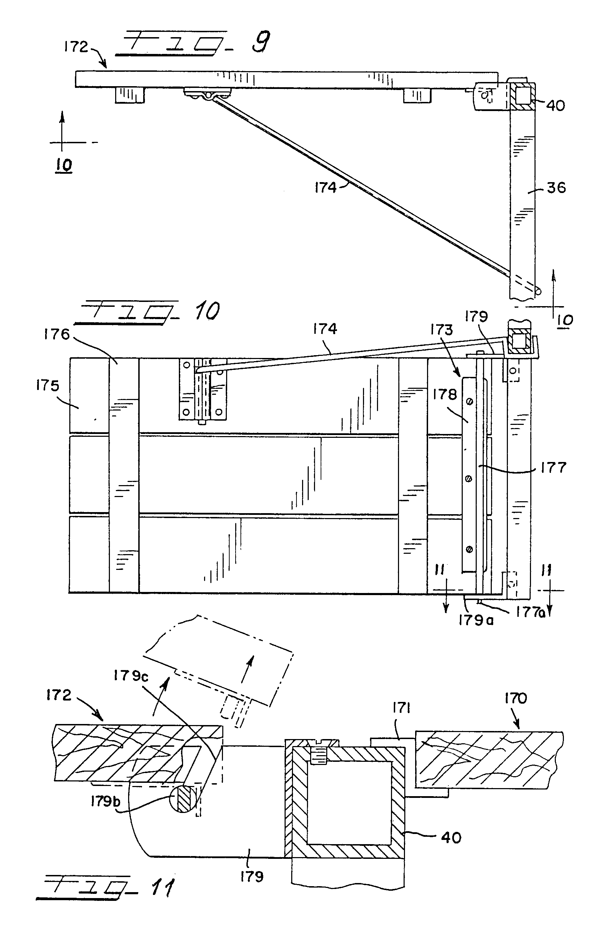

The working board 172 (Fig. 9) is preferably connected along one edge by a hinge 173 to the side member 40 and is supported in the usable position, extending generally horizontally as shown in Fig. 1, by a support rod 174. A support rod 174 is pivotally supported on the lower surface of the board 172 and has an offset outer free end received around the leg 36. The same offset portion may be received in the other leg 36 so that the working board 172 remains in a fixed stored position when not in use.

The working board may be formed from a plurality of slats 175 connected by cross-members 176. The hinge 173 includes a rod 177 connected by a bracket 178 to the working board 170. The rod has a flattened portion 177a on one end and is supported on a pair of brackets 179 and 179a. The brackets have openings 179b and one opening has a slot 179c extending to one edge for receiving the flattened portion. Thus, the working board can easily be removed for cleaning.

According to a further aspect of this invention, the grill 20 incorporates a removable thermometer 180 in the cover 58, which can be utilized for sensing the internal temperature of the cooking chamber or, alternatively, the internal temperature of the food or meat that is being cooked. Thus, thermometer 180 includes a conventional piercing portion 182 extending from an indicator dial 184. In normal operation, the portion 182 is received through an opening (not shown) in the front portion of cover 58 to be readily visible for viewing by the operator. When it is desired to sense the temperature of meat that is being cooked on the grill, the thermometer is merely removed and inserted into the food product, where the temperature is then sensed as a function of the meat temperature rather than the chamber temperature.

According to a further aspect of the invention, the cover 56 consists of two cast end caps 190 and an insert 192 formed of non-metallic material, which are interconnected through the use of special flush-headed bolts 194. The end caps 190 have extensions 195 with a handle 196 secured to the extensions.

As illustrated in Fig. 3A, the bolt 194 has an enlarged head 197 received with an enlarged recess 198 surrounding an opening 199 in end piece 190. The bolt 194 has a serrated portion 200 that provides a friction grip in the opening 199. The bolt 194 also has a threaded portion 202 received through an opening in the insert 192 and receives a nut 204. Thus, the bolt 194 can be inserted into the opening 199 and nut 204 can be used to draw the serrated portion 200 into the opening. The serrated portion 200 will prevent the bolt 194 from turning in the opening. After the nut has been tightened, the recessed head 197 will not protrude beyond the outer surface of the end piece 190, as shown in Fig. 3A.

As shown in Fig. 4, the porcelain-coated metal insert 192 has an extension 192a which extends between the handle 196 and sidewall 88 of housing 52. The extension acts as a heat shield to prevent the handle from overheating.

The cart 22 (Fig. 1) may also include cross braces 270 and a reinforcing center brace 272 on which removable article-supporting units 274 may be suspended.

As can be appreciated from the above description, the gas grill disclosed herein operates on an entirely new principal. The combination of tubular burners covered by inverted V-shaped sear bars and a deep removable grease collector unit with a small removable grease catcher pan at the lower end substantially eliminates the possibility of the grease in the collector unit from igniting.

Furthermore, the sear bars can be quickly heated to a temperature sufficient for controlled flare-ups of the grease on the inclined surfaces to sear the meat being cooked. This is accomplished by ignition of all three tubular burners. After the meat such as steaks, has been seared on both sides, the intermediate burner can be shut off and the sear bars' temperature will be reduced to a point where the grease thereon will not ignite, but will still vaporize to give the desired cooking flavor.

There is also a critical relationship between the spacing of the sear bars above the burner tubes. If the spacing is too great, the flavorizing bars will not be heated sufficient, and if the spacing is too samll they will overheat. While the parameters of this spacing have not been fully explored, a spacing of about two inches and more specifically 5.4 cm (2-1/8 inches), between the lower edges of the flavorizing bars and the openings 126, 158 is provided for optimum heating of the bars. Also the spacing between the lower edges of the sear bars is about 5.56 cm (2-3/16 inches), which is significantly greater than the diameter of the burner tubes to insure that the burner tube is adequately protected. The height of the sear bar is about 3.45 cm (1-3/8 inches) so that the apex of the bar is located about 8.89 cm (3-1/2 inches) from the center of the burner tube.

The gas grill is designed for easy assembly without the use of any tools, and the arrangement of parts is such that minimum instructions are necessary.

## Claims

1. A gas grill (20) comprising a rectangular housing (24) having a gas burner assembly (62) in the bottom and a food support (66) above the gas burner assembly, said housing (24) having upper and lower edges and support members (120) at opposed corners with abutments (122) on upper surfaces between said upper and lower edges and openings (124) in an opposed end wall (80) aligned with said support members (120), at least two elongated burner units (110) of substantially identical construction, each burner unit (110) consisting of an elongated tube (114) having at least one row of apertures (126) along a peripheral edge and a flattened portion (116) on one end;

   characterized by

said flattened portion (116) being located in a common plane with said row of apertures (126), said flattened portion (116) having a slot (118) extending from a free edge with said slot (118) being offset from the center axis of said elongated tube (114) and receiving an abutment (122) so that said tubes (114) can be inserted axially (122) through said openings (124) and be supported on said corner support members (120) and said opposed wall end (80) with said apertures (126) directed towards the center of said housing (24);

a third burner unit (112) intermediate said two burner units (110) and a pilot tube (130) interconnecting said two burner units (110) adjacent said flattened portions (116), said third burner unit (112) having a free end supported on said pilot tube (130) and in communication therewith so that one of said burners may be ignited from said pilot tube (130);

said pilot tube (130) being open at opposite ends and said two burner units (120) having openings (132) receiving said opposite ends, said pilot tube (130) having a projection (154) intermediate opposite ends and said third burner unit (112) having a positioning slot (153) receiving said pilot tube (130) and said projection (154) so that said pilot tube (130) and said burner units (110,112) can be assembled within said housing by manipulation of said tubes without the use of any fastener means.

2. A gas grill as defined in Claim 1, having a plurality of sear bars (70) in a housing (24) above burner units (110, 112), characterized by each sear bar (70) consisting of an elongated inverted V-shaped member formed on heat-conductive material to define inclined grease-evaporating surfaces extending generally parallel to said burner units (110,112).

3. A gas grill as defined in claim 2, characterized by said rectangular housing (24) having opposed ledges (86) on opposite end walls (80) for supporting said sear bars (70) which define a sear grid (64) above said burner units (110, 112).

4. A gas grill as defined in claim 3, further characterized by a second group of sear bars (70) of generally inverted V-shaped members extending generally perpendicular above said sear grid (64).

5. A gas grill as defined in claim 4, characterized by said housing (52) having ledges (86) on opposed side walls (88) above said lodges (86) on said end walls (80) to support said second group of sear bars (70).

6. A gas grill as defined in claim 5, further characterized by a cart (22) supporting said housing (24), said cart (22) including elongated spaced side members (40) with said ledges (86) on said side walls (88) of said housing (24) resting on said side members (40) to support said housing (24) on said cart (22).

7. A gas grill as defined in claim 6, characterized by said cart (22) being formed from rectangular tubular members (30) with said side members (40) each including first and second members (32, 36) positioned in end-to-end relation, one of said first and second members (32, 36) having an internal extension (44) received into an open end of the other of said first and second members (30) and fastener means (50) received by said internal extension (44) to interconnect said first and second members (40).

8. A gas grill as defined in claim 5, further characterized by a separate removable burner unit (160) supported on said side members (40) outside said housing (24).

9. A gas grill as defined in claim 1, characterized by said housing (24) including a cover (58) hinged to an upper edge of one wall (88), said cover (58) having a removable thermometer (180) supported thereon, said thermometer (180) including a piercing projection portion (182) extending through said cover (58) to sense the internal temperature of said housing (24), said thermometer (180) being removable from said cover (58) and insertable into food being cooked to sense the internal temperature of the food.

10. A gas grill as defined in claims 1 to 9, characterized by said housing (24) having a removable lower grease collector unit (90), said grease collector unit (90) including inwardly-tapered walls terminating adjacent a lower opening (96) and further including a removable grease collector cup (98) below said lower opening (96).

11. A gas grill as defined in claim 10, characterized by said housing (24) being a one-piece casting having inwardly-tapered walls terminating adjacent a lower opening (96) and further including a removabel grease collector cup (98) below said lower opening (96).

## Patentansprüche

1.  Ein Gasgrill (20), bestehend aus einem rechtwinkligen Gehäuse (24) mit einer Gasbrenneranordnung (62) in dem Boden und einem Nahrungsmittelträger (66) oberhalb der Gasbrenneranordnung, wobei das Gehäuse (24) obere und untere Ränder und Tragorgane (120) an gegenüberliegenden Ecken mit Widerlagern (122) auf oberen Flächen zwischen den oberen und unteren Rändern sowie Öffnungen (124) in einer gegenüberliegenden Endwand (80), die gegenüber den Tragorganen (120) ausgerichtet ist, sowie mindestens zwei sich längs erstreckende Brennereinheiten (110) von im wesentlichen identischer Konstruktion aufweist und jede Brennereinheit (110) aus einem sich längs erstreckenden Rohr (114) mit mindestens einer Reihe von Durchbrechungen (126) entlang einem Umfangsrand und einen abgeflachten Teil (116) an einem Ende aufweist,
    **dadurch gekennzeichnet,**
    daß der abgeflachte Teil (116) in einer gemeinsamen Ebene mit der Reihe von Durchbrechungen (126) angeordnet ist, der abgeflachte Teil (116) einen Schlitz (118) aufweist, der sich von einer freien Kante erstreckt, wobei der Schlitz (118) gegenüber der Mittelachse des sich längs erstreckenden Rohres (114) versetzt ist und ein Widerlager (122) aufnimmt, so daß die Rohre (114) axial (122) durch die Öffnungen (124) eingesetzt und auf den Tragorganen (120) an den Ecken abgestützt und die gegenüberliegende Endwand (80) mit den Durchbrechungen (128) zur Mitte des Gehäuses (24) gerichtet werden können;
    eine dritte Brennereinheit (112) zwischen den beiden Brennereinheiten (110) und einem Pilotrohr (130) angeordnet ist, das die beiden Brennereinheiten (110) nahe der abgeflachten Teile (116) miteinander verbindet, daß die dritte Brennereinheit (112) ein freies Ende aufweist, das auf dem Pilotrohr (130) abgestützt ist und mit diesem derart in Verbindung steht, daß einer der Brenner von dem Pilotrohr (130) aus gezündet werden kann;
    das Pilotrohr (130) am gegenüberliegenden Ende offen ist und die beiden Brennereinheiten (120) mit die gegenüberliegenden Enden aufnehmenden Öffnungen (132) versehen sind, das Pilotrohr (130) einen Vorsprung (154) zwischen den gegenüberliegenden Enden aufweist und die dritte Brennereinheit (112) mit einem Positionierschlitz (153) versehen ist, der das Pilotrohr (130) und den Vorsprung (154) aufnimmt, so daß das Pilotrohr (130) und die Brennereinheiten (110, 112) innerhalb des Gehäuses durch Handhabung der Rohre ohne die Verwendung irgendeiner Befestigungsvorrichtung zusammengesetzt werden können.

2.  Gasgrill nach Ansruch 1 mit einer Mehrzahl von Heizstäben (70) in einem Gehäuse (24) oberhalb der Brennereinheit (110, 112), **dadurch gekennzeichnet,** daß jeder Heizstab (70) aus einem sich längs erstreckenden, umgekehrt V-förmigen Organ aus wärmeleitendem Material besteht, um geneigte, fettverdampfende Flächen zu bilden, die sich im allgemeinen parallel zu den Brennereinheiten (110, 112) erstrecken.

3.  Gasgrill nach Anspruch 2, **dadurch gekennzeihnet**, daß das rechtwinkelige Gehäuse (24) sich gegenüberliegende Leisten (86) an gegenüberliegenden Endwänden (80) zum Tragen der Heizstäbe (70) aufweist, die einen Heizrost (64) oberhalb der Brennereinheiten (110, 112) bilden.

4.  Gasgrill nach Anspruch 3, **gekennzeichnet** durch eine zweite Gruppe von Heizstäben (70) aus im allgemeinen eine umgekehrte V-Form aufweisenden Teilen, die sich im allgemeinen senkrecht oberhalb des Heizrostes (64) erstrecken.

5.  Gasgrill nach Anspruch 4, **dadurch gekennzeichnet**, daß das Gehäuse (52) Leisten (86) an gegenüberliegenden Seitenwänden (88) oberhalb der Leisten (86) an den Endwänden (80) zum Tragen der zweiten Gruppe von Heizstäben (70) aufweist.

6.  Gasgrill nach Anspruch 5, **gekennzeichnet** durch einen das Gehäuse (24) tragenden Wagen, wobei der Wagen (22) sich längs erstrekkende, im Abstand voneinander angeordnete Seitenteile (40) aufweist und die Leisten (86) an den Seitenwänden (88) des Gehäuses (24) auf den Seitenteilen (40) ruhen, um das Gehäuse (24) auf dem Wagen (22) abzustützen.

7.  Gasgrill nach Anspruch 6, **dadurch gekennzeichnet**, daß der Wagen (22) aus rechtwinkligen, rohrförmigen Teilen (30) besteht, wobei die Seitenteile (40) jeweils erste und zweite Teile (32, 36) umfassen, die mit ihren Enden gegeneinander liegen, daß eines der ersten und zweiten Teile (32, 36) eine innere Verlängerung (44) aufweist, die von einem offenen Ende des anderen der ersten und zweiten Teile (30) aufgenommen wird, und daß die innere Verlängerung (44) Befestigungsmittel (50) aufnimmt, um die ersten und zweiten Teile (40) miteinander zu verbinden.

8. Gasgrill nach Anspruch 5, **gekennzeichnet** durch eine getrennte, wegnehmbare Brennereinheit (160), die auf den Seitenteilen (40) außerhalb des Gehäuses (24) abgestützt ist.

9. Gasgrill nach Anspruch 1, **dadurch gekennzeichnet**, daß das Gehäuse (24) einen Deckel (58) umfaßt, der an einem oberen Rand einer Wand (88) scharnierartig befestigt ist, daß der Deckel (58) ein darauf abgestütztes, wegnehmbares Thermometer (180) aufweist, wobei das Thermometer (180) ein vorspringendes Durchstechteil (182) umfaßt, das sich durch den Deckel (58) hindurch erstreckt, um die Innentemperatur des Gehäuses (24) abzufühlen, wobei das Thermometer (180) von dem Deckel (58) wegnehmbar und in ein zu röstendes Nahrungsmittel einsetzbar ist, um die Innentemperatur des Nahrungsmittels abzufühlen.

10. Gasgrill nach den Ansprüchen 1 bis 9, **dadurch gekennzeichnet**, daß das Gehäuse (24) eine abnehmbare, untere Fettsammeleinheit (90) aufweist, wobei die Fettsammeleinheit (90) nach innen geneigte Wände umfaßt, die in der Nähe einer unteren Öffnung (96) enden, sowie ferner einen abnehmbaren Fettsammeltopf (98) unter der unteren Öffnung (96) umfaßt.

11. Gasgrill nach Anspruch 10, **dadurch gekennzeichnet**, daß das aus einem einteiligen Gußteil bestehende Gehäuse (24) nach innen abgeschrägte Wände aufweist, die in der Nähe einer unteren Öffnung (96) enden, und ferner einen wegnehmbaren Fettsammeltopf (98) unter der unteren Öffnung (96) umfaßt.

## Revendications

1. Gril au gaz (20) comprenant une enceinte rectangulaire (24) ayant au fond un ensemble brûleur au gaz (62) et un support de nourriture (66) au-dessus de l'ensemble brûleur au gaz, ladite enceinte (24) ayant des bords supérieurs et inférieurs et des pièces de support (120) dans les coins opposés avec des butées (122) sur les surfaces supérieures situées entre lesdits bords supérieurs et inférieurs et des ouvertures (124) à l'extrémité de la paroi opposée (80) alignées avec lesdites pièces de support (120), au moins deux unités brûleur allongées (110) de construction sensiblement identique, chacune des unités brûleur (110) consistant en un tube allongé (114) ayant au moins une rangée d'ouvertures (126) le long d'un bord périphérique et une partie aplatie (116) à une extrémité ;

caractérisé par

ladite partie aplatie (116) étant située dans un plan commun avec ladite rangée d'ouvertures (126), ladite partie aplatie (116) ayant une fente (118) s'étendant à partir d'un bord libre, avec ladite fente (118) décalée de l'axe central dudit tube allongé (114) et recevant une butée (122), de sorte que lesdits tubes (114) peuvent être insérés axialement (122) à travers lesdites ouvertures (124) et être supportés sur lesdites pièces support en coin (120) et ladite extrémité à la paroi opposée (80) avec lesdites ouvertures (126) dirigées vers le centre de ladite enceinte (24);

une troisième unité brûleur (112) placée entre lesdites deux unités brûleur (110) et un tube guide (130) interconnectant lesdites deux unités brûleur (110) et étant adjacent desdites parties aplaties (116), ladite troisième unité brûleur (112) ayant une extrémité libre supportée par ledit tube guide (130) et en communication avec celui-ci, de sorte que lesdits brûleurs peuvent être allumés par ledit tube guide (130);

ledit tube guide (130) étant ouvert aux extrémités opposées et lesdites deux unités brûleur (110) ayant des ouvertures (132) recevant lesdites extrémités opposées, ledit tube guide (130) ayant une partie en saillie (154) située entre les extrémités opposées et ladite troisième unité brûleur (112) ayant une fente de positionnement (153) recevant ledit tube guide (130) et ladite partie en saillie (154), de sorte que ledit tube guide (130) et lesdites unités brûleur (110, 112) peuvent être assemblées dans ladite enceinte par manipulation desdits tubes sans utiliser aucun moyen de fixation.

2. Gril tel que défini selon la revendication 1, ayant une pluralité de barres de cuisson (70) dans l'enceinte (24) au-dessus des unités brûleur (110, 112), caractérisé en ce que chaque barre de cuisson (70) comprend une pièce en forme de V inversé, allongée, fabriquée dans un matériau conducteur de la chaleur définissant des surfaces inclinées pour évaporer la graisse, s'étendant généralement en parallèle auxdites unités brûleur (110, 112).

3. Gril au gaz tel que défini selon la revendication 2 caractérisé par ladite enceinte rectangulaire (24) ayant des rebords opposés (82) sur des parois d'extrémité opposées (80) supportant lesdites barres de cuisson (70) qui définissent une grille de cuisson (64) au-dessus desdites unités brûleur (110, 112).

4. Gril au gaz tel que défini selon la revendication 3 caractérisé par un second groupe de barres de cuisson (70) de pièces généralement en forme de V inversé s'étendant, généralement, perpendiculairement au-dessus de ladite grille de cuisson (64).

5. Gril au gaz tel que défini selon la revendication 4 caractérisé par une enceinte (52) ayant des rebords (86) sur des parois latérales opposées (89), au-dessus desdits rebords (82) sur lesdites parois d'extrémité (80), supportant ledit second groupe de barres de cuisson (70).

6. Gril au gaz tel que défini selon la revendication 5 caractérisé, de plus, par un chariot (22) supportant ladite enceinte (24), ledit chariot (22) comprenant des pièces (40) latérales espacées allongées avec lesdits rebords (86) sur lesdites parois latérales (88) de ladite enceinte (24) reposant sur lesdites pièces latérales (40) pour supporter ladite enceinte (24) sur ledit chariot (22).

7. Gril au gaz tel que défini selon la revendication 6 caractérisé en ce que ledit chariot (22) est formé de pièces tubulaires rectangulaires (30) avec lesdites pièces latérales (40) chacune comprenant une première pièce et une seconde pièce (32, 36) positionnées bord à bord, une desdites première et seconde pièces (32, 36) ayant une extension interne (44) emboîtée dans une extrémité ouverte de l'autre desdites première et seconde pièces et un moyen de fixation (50) placé sur ladite extension interne (44) pour relier lesdites première et seconde pièces.

8. Gril au gaz tel que défini selon la revendication 5 caractérisé, de plus, par une unité brûleur séparée amovible (160) supportée par lesdites pièces latérales (40) à l'extérieur de ladite enceinte (24).

9. Gril au gaz tel que défini selon la revendication 1 caractérisé par ladite enceinte (24) comprenant un couvercle (58) articulé avec un bord supérieur d'une paroi (88), ledit couvercle (58) ayant un thermomètre amovible (180) supporté sur le couvercle, ledit thermomètre (180) comprenant une partie (182) en saillie s'étendant à travers ledit couvercle (58) pour mesurer la température interne de ladite enceinte (24), ledit thermomètre (180) étant amovible dudit couvercle (58) et pouvant être introduit dans la nourriture en cours de cuisson pour mesurer la température interne de la nourriture.

10. Gril au gaz tel que défini selon les revendications 1 à 9 caractérisé par ladite enceinte (24) ayant une unité (90) amovible pour collecter la graisse située en bas, ladite unité (90) pour collecter la graisse comprenant des parois inclinées intérieurement adjacentes à une ouverture inférieure (96) et comprenant de plus une coupelle amovible collectant la graisse (98), en dessous de l'ouverture inférieure (96).

11. Gril au gaz tel que défini selon la revendication 10 caractérisé en ce que ladite enceinte (24) est une pièce moulée ayant des parois inclinées intérieurement se terminant à côté d'une ouverture inférieure (96) et de plus comprend une coupelle amovible (98) collectant la graisse, placée au-dessous de ladite ouverture inférieure (96).

FIG-2

FIG-1

EP 0 332 228 B1

FIG_3_

FIG_3A_

12

EP 0 332 228 B1

FIG-5-

FIG-4-

13

Fig. 6

_Fig_7_

_Fig_8_

FIG. 9

FIG. 10

FIG. 11